# EUROPÄISCHE PATENTSCHRIFT

(11) **EP 1 040 972 B1**
(45) Veröffentlichungstag und Bekanntmachung des Hinweises auf die Patenterteilung: **01.06.2005**
(21) Anmeldenummer: 00104443.7
(22) Anmeldetag: 06.03.2000
(51) Int. Cl.: B60S 1/04, B60S 1/34

(54) **Befestigungsanordnung für eine Einrichtung an einer Fahrzeugkarosserie**
Fixing arrrangement of a device on a vehicle body
Structure de fixation d'un dispositif sur une carosserie de véhicule

(30) Priorität: 27.03.1999 DE 19914120
(43) Veröffentlichungstag der Anmeldung: 04.10.2000
(73) Patentinhaber: Volkswagen Aktiengesellschaft, 38436 Wolfsburg (DE)
(72) Erfinder: Ostrowski, Wolfgang, 38446 Wolfsburg (DE)

(56) Entgegenhaltungen:
- EP-A- 0 916 559
- DD-A- 222 249
- DE-A- 19 833 488
- FR-A- 2 775 456

## Beschreibung

Die Erfindung betrifft eine Befestigungsanordnung für eine an der Außenseite einer Fahrzeugkarosserie vorgesehene Einrichtung, insbesondere eine Scheibenwischeranlage, mit der das durch die Einrichtung gegebene Verletzungsrisiko bei Unfällen mit Fußgängern, Inline-Skatern oder Radfahreren verringert wird.

Einige an einer Fahrzeugkarosserie notwendige Einrichtungen sind an dieser so angeordnet, dass sie bei einem Unfall mit Beteiligung einer der genannten Personen ein erhöhtes Verletzungsrisiko darstellen, insbesondere Scheibenwischeranlagen oder auch Antennen. Erstere werden üblichgerweise im Bereich der Antriebswellen für den jeweiligen Scheibenwischer an der Karosserie gehaltert. Es ist bekannt, die Antriebswellen dabei so zu lagern, dass diese bei einer axialen Stoßbelastung bei einem Verkehrsunfall durch eine der in diesen involvierten Personen nachgibt und in ihrer Lagerung axial verschoben wird. Diese Maßnahme führt zu einer Verringerung der Verletzungsgefahr beim Aufprallen des Kopfes oder von Gliedmaßen der jeweiligen Person auf einen Scheibenwischer.

In der EP 0 806 329 A2 ist eine Lagerung für eine axial beanspruchbare Welle zur Verringerung des Verletzungsrisikos beschrieben. Die Lagerung weist eine feststehende Aufnahme mit einem Federring auf, an dem die Welle in axialer Richtung über eine sich verjüngende oder erweiternde Fläche anliegt und der über seinen Umfang zumindest an einer Stelle eine Unterbrechung desselben aufweist. Bei einer plötzlich auftretenden axialen Stoßbelastung wird der Federring durch die stoßbelastete Welle je nach Ausführung aufgeweitet oder zusammengedrückt, und die Welle wird in axialer Richtung durch den Federring oder mit diesem zusammen durch die Aufnahme gedrückt. Werden die Antriebswellen in einer Scheibenwischeranlage derartig gelagert, so wird das Verletzungsrisiko für eine auf einen Scheibenwischer stoßende Person reduziert. Der Verschiebeweg des jeweiligen Scheibenwischers ist dabei durch die Aufnahme bestimmt.

Gegenstand der DE 198 33 488 A1 ist eine Wischvorrichtung für ein Fahrzeug mit einem Drehzapfen (Antriebswelle/ Wischerwelle), einem Lager für diesen und einer quer zur Längsachse der Wischerwelle angeordneten Lagerhalter. Dieser kann an in der

Fahrzeugkarosserie angeordneten Bolzenlöchern mit radial nach innen gerichteten Haltesegmenten mit Bolzen befestigt sein. Die Halteseamente werden beim Auftreten einer Stoßbelastung von der Außenseite des Fahrzeugs her durch die Bolzen beaufschlagt und plastisch deformiert, so dass die Bolzen und der Lagerhalter mit dem Lager und der Wischvorrichtung von der Fahrzeugkarosserie gelöst und nach deren Innenseite verschoben werden. Die Befestigungsanordnung ist irreversibel, da die Haltesegmente bleibend deformiert werden.

Des Weiteren ist in der EP 0 916 559 A2 eine Befestigungsanordnung für eine Wischerwelle beschrieben, bei der eine elastische Aufnahme für eine Wischerwelle quer zu ihrer Längsachse über ein elastisches Glied und einen Halterungsbock an der Fahrzeugkarosserie gehaltert und bei einer axialen Stoßbelastung von der Halterung lösbar ist. Dabei ist das elastische Glied einstückiger Bestandteil der Aufnahme und steht mit einem an der Fahrzeugkarosserie angeordneten Halterungsbock in Eingriff.

Es ist Aufgabe der Erfindung, eine Befestigungsanordnung für eine an der Außenseite einer Fahrzeugkarosserie angeordnete Einrichtung nach dem Oberbegriff der Ansprüche 1 oder 2 alternativ zu gestalten und dabei die durch einen Aufprall auf diese gegebene Verletzungsgefahr für einen Radfahrer, Fußgänger oder Inline-Skater weitmöglichst zu reduzieren.

Diese Aufgabe wird bei einer Befestigungsanordnung nach dem Oberbegriff der Ansprüche 1 oder 2 durch deren Kennzeichnende Merkmale gelöst. Vorteilhafte Ausgestaltungen sind in den Unteransprüchen aufgeführt.

Die Erfindung besteht danach darin, dass bei einer Befestigungsanordnung für eine Einrichtung an der Außenseite einer Fahrzeugkarosserie mit wenigstens einer an dieser gehalterten Aufnahme für ein Verbindungs- oder Funktionselement der Einrichtung, beispielsweise die Antriebswelle einer Scheibenwischeranlage, bei der die Aufnahme über ein quer zu ihrer Längsachse angeordnetes elastisches Glied an der Fahrzeugkarosserie gehaltert und durch eine auf die Aufnahme wirkende Stoßbelastung aus der Halterung lösbar ist, die Aufnahme über ein an dieser befestigtes Halterungselement mit einem fest an der Fahrzeugkarosserie angeordneten Halterungsbock in Eingriff steht. Dabei ist entweder das Haiterungseiement oder der Halterunasbock das elastische Glied. Letzterer ist an einer Öffnung des Karosserieblechs befestigt und weist eine in axialer und von der Einrichtung wegweisenden Richtung verjüngte Öffnung mit einem in axialer Richtung erheblich verjüngten Abschnitt auf, und das Halterungselement ist konzentrisch an der Aufnahme angeordnet und in der angegebenen Richtung mit der Öffnung und mit dem Abschnitt korrespondierend, konisch verjüngt. Alternativ dazu ist der Halterunasbock an der Unterseite des Karosserieblechs angeordnet und in axialer und von der Einrichtung wegweisender Richtung konisch erweitert und weist einen in axialer Richtung erheblich konisch erweiterten Abschnitt auf. Das Halterungselement ist mit einer in der angegebenen Richtung mit dem Halterungsbock korrespondierenden, konisch erweiterten Öffnung mit einem erheblich konisch erweiterten Abschnitt versehen und an einem mit der Aufnahme fest verbundenen Trägerelement angeordnet.

Bei einer im wesentlichen axialen Stoßbelastung, bezogen auf die Aufnahme, ist das Halterungselement über den am Halterungsbock ausgebildeten Abschnitt, der in Abhängigkeit von deren Ausgestaltung in der axialen Richtung verjüngt oder erweitert ist, außer Eingriff bringbar. Dabei dient der Abschnitt sowohl einer definierten Fixierung der beiden Halterungsglieder - Halterungsbock und Halterungselement - aneinander als auch einem Lösen derselben bei einer axialen Stoßbelastung. Die zum Lösen erforderliche Kraft ist durch die geometrische Gestaltung der Befestigungsanordnung und durch den eingesetzten elastischen Werkstoff vorbestimmbar. Die Befestigungsanordnung ermöglicht es, dass die mit dieser gehalterte Einrichtung bei einem Unfall mit einer beteiligten Person unter Energieaufnahme bis auf die Fahrzeugkarosserie gedrückt und so das Verletzungsrisiko für die betreffende Person weitestmöglich reduziert wird.

Bei einer bevorzugten Ausführungsform ist der Abschnitt, über den das Halterungselement außer Eingriff bringbar ist, als konzentrisch angeordnete Nut oder als ein konzentrisch angeordneter Vorsprung ausgebildet und der mit dem jeweiligen Abschnitt korrespondierende Abschnitt als konzentrisch ausgebildeter Vorsprung bzw. als konzentrisch angeordnete Nut. Bei einer unfallbedingten axialen Stoßbelastung der Aufnahme durch eine in den Unfall verwickelte Person tritt, bedingt durch die konisch an den Halterungsgliedem ausgebildeten Flächen der Nut und des Vorsprungs bzw. des Vorsprungs und der Nut, eine Kraftkomponente quer zur axialen Richtung auf, durch die das jeweils elastisch ausgebildete Halterungsglied - der Halterungsbock oder das Halterungselement - elastisch aufgeweitet oder zusammengedrückt wird, mit der Folge, dass die Halterungsglieder außer Eingriff gelangen. Die kegelstumpfförmige Ausbildung des Halterungsbockes mit der konischen Erweiterung oder Verjüngung in Stoßrichtung sorgt zusätzlich dafür, dass im weiteren Verlauf der axialen Verschiebung des Halterungselementes die elastische Aufweitung oder Kompression des jeweiligen Halterungsgliedes unter Energieaufnahme fortgesetzt wird, bis die Einrichtung an der Karosserie anschlägt.

Das Halterungselement kann auch ein Federring sein, der den Halterungsbock im Bereich der Nut oder des Vorsprunges umgibt und mit dieser bzw. diesem in Eingriff steht. Damit der beschriebene Mechanismus auch bei dieser Lösung zum Ablauf kommt, ist es von Vorteil, wenn der Federring auf seiner der Aufnahme zugewandten Seite unterbrochen ist.

Um einen festen Sitz des Halterungselementes am Halterungsbock und damit der Einrichtung im stoßunbelasteten Zustand und eine wirksame Energieaufnahme nach dem Außer-Eingriff-Drücken der beiden Halterungsglieder durch eine Stoßbelastung sicherzustellen, ist es zweckmäßig, wenn der Neigungswinkel der konischen Flächen des Halterungsbockes und des Halterungselementes gegenüber deren Längsachsen 10 bis 20 Grad, vorzugsweise 35 Grad, betragen.

Als elastischer Werkstoff ist ein Kunststoff mit einer Shore-Härte von 60 bis 75 vorgesehen.

Die Erfindung wird nachfolgend anhand von Ausführungsbeispielen erläutert. In den zugehörigen Zeichnungen zeigen schematisch:
Fig. 1: eine Befestigungsanordnung für die Aufnahme einer Scheibenwischerwelle und
Fig. 2: die Befestigung einer derartigen Aufnahme in einer weiteren Ausführung.

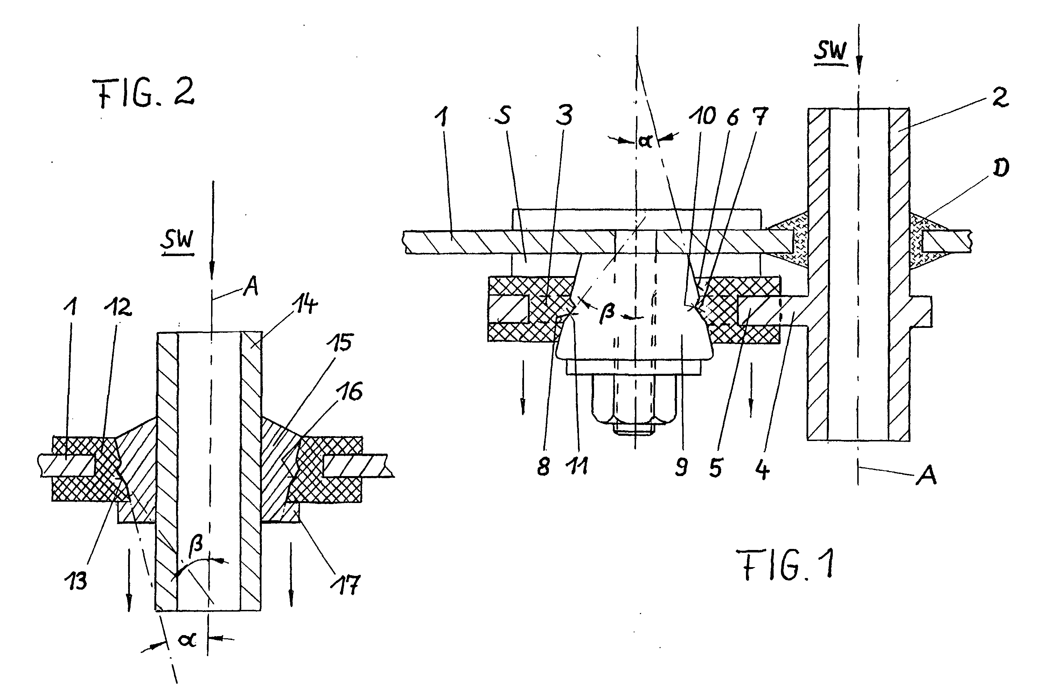

Die in Fig. 1 gezeigte Befestigungsanordnung zeigt eine an einem Karosserieblech 1 angeordnete Aufnahme 2 für die Antriebswelle eines Scheibenwischers SW (nicht dargestellt). Die Aufnahme 2 ist mit einem Dichtelement D an einer Karosserieöffnung angeordnet und weist ein ringförmiges Halterungselement 3 aus einem elastischen Kunststoff mit einer Shore-Härte von im wesentlichen 70 auf, das quer zur Längsachse A der Aufnahme 2 an einem fest mit dieser verbundenem Trägerelement 4 mit einem ringförmigen Teil 5 ausgebildet ist. Die zentral ausgebildete Öffnung des Halterungselementes 3 ist in axialer und vom Scheibenwischer SW wegweisender Richtung konisch erweitert, wobei der Neigungswinkel α der konischen Fläche 6 gegenüber der parallel zur Längsachse A verlaufenden Rotationsachse des Halterungselementes 3 15 Grad beträgt. In der Mitte dieser Fläche 6 ist ein Vorsprung 7 mit zwei Flanken ausgebildet, von denen die in der genannten Richtung erweiterte Flanke 8 einen Neigungswinkel β von 35 Grad zur Rotationsachse hat.

Das Halterungselement 3 ist an einem an der Unterseite des Karosseriebleches 1 mit einer Schraubverbindung befestigten Halterungsbock 9 aus einem unelastischen Kunststoff angeordnet. Dieser Halterungsbock 9 ist in axialer und vom Scheibenwischer SW wegweisenden Richtung konisch erweitert, wobei der Neigungswinkel α der konischen Umfangsfläche gegenüber der Rotationsachse 15 Grad beträgt, und weist eine durch zwei Flanken gebildete Nut 10 auf, deren vom Karosserieblech 1 entferntere Flanke 11 einen Neigungswinkel β von 35 Grad hat und die mit dem Vorsprung 7 korrespondiert. Durch den Vorsprung 7 und die Nut 10 ist das Halterungselement 3 am Halterungsbock 9 definiert fixiert. Um das Halterungselement 3 gegen ein Lösen vom Halterungsbock 9 in Richtung des Scheibenwischers SW zu sichern, ist zwischen dem Halterungselement 3 und dem Karosserieblech 1 eine beidseitig formschlüssig anliegende Scheibe S angeordnet. Alternativ dazu kann auch das Halterungselement 3 so ausgebildet sein, daß es formschlüssig am Karosserieblech anliegt.

Bei einer unfallbedingten Stoßbelastung der Aufnahme 2 in Richtung ihrer Längsachse A werden das Trägerelement 4 und das an diesem angeordnete Halterungselement 3 ebenfalls in dieser Richtung stoßbelastet. Durch die vorhandenen konischen Flächen 8 und 11 und die gegebene konische Ausbildung der Öffnung des Halterungselementes 3 und des Umfanges des Halterungsbockes 9 tritt dabei auch eine Kraftkomponente quer zur Längsachse auf, die das elastische Halterungselement 3 aufweitet und mit dem Vorsprung 7 aus der Nut 10 drückt. Dadurch gelangt dieses (3) außer Eingriff mit dem Halterungsbock 9, und die Aufnahme 2 wird in axialer Richtung in das Karosserieinnere gedrückt, bis der an dieser gehalterte Scheibenwischer SW am Karosserieblech 1 anstößt. Beim Verschieben des Halterungselementes 3 entlang des Halterungsbockes 9 wird dieses durch die konischen Flächen unter Energieaufnahme weiter elastisch aufgeweitet.

Eine alternative Befestigungsform ist in Fig. 2 dargestellt. Bei dieser ist ein ringförmiger Halterungsbock 12 aus einem elastischen Kunststoff mit einer Shore-Härte von im wesentlichen 70 direkt an einer Öffnung im Karosserieblech 1 mit diesem formschlüssig verbunden. Die kreisrunde Öffnung des Halterungsbockes 12 ist in Richtung der Längsachse A verjüngt, wobei der Neigungswinkel α der konischen Fläche zur Achse A 15 Grad beträgt. In der Öffnung ist konzentrisch eine zwei Flanken aufweisende Nut mit einer Flanke 13 mit einem Neigungswinkel β von 35 Grad angeordnet. Mit dem Halterungsbock 12 steht ein fest mit einer Aufnahme 14 verbundenes Halterungselement 15 in Eingriff. Dieses ist in axialer und von dem von der Aufnahme aufzunehmenden Scheibenwischer SW wegweisender Richtung kegelstumpfförmig verjüngt. Der Neigungswinkel α beträgt wie beim Halterungsbock 12 15 Grad. Das Halterungselement 15 weist an seinem Umfang einen mit der Nut des Halterungsbockes 12 korrespondierenden Vorsprung mit einer Flanke 16 auf. Durch die Nut und den Vorsprung ist die Position des Halterungselementes 15 und der Aufnahme 14 am Halterungsbock 12 definiert. Am verjüngten Ende des Halterungselementes 15 ist ein Bund 17 ausgebildet, der ein Lösen der beiden Halterungsglieder 12 und 15 voneinander in Richtung des Scheibenwischers SW verhindert. Dieser Bund kann auch eine separate Ringscheibe sein, die an der Aufnahme 14 angeschraubt ist, wozu diese mit einem Gewinde versehen ist.

Bei einer Stoßbelastung der Aufnahme 14 in axialer Richtung wird das mit dieser fest verbundenen Halterungselement 15 aus dem elastischen Halterungsbock 12 gedrückt, wobei dieser unter Energieaufnahme komprimiert wird, so daß die Aufnahme bis zur Anlage des Scheibenwischers SW am Karosserieblech 1 zurückweichen kann.

### BEZUGSZEICHENLISTE

- 1: Karosserieblech
- 2: Aufnahme
- 3: Halterungselement
- 4: Trägerelement
- 5: ringförmiger Teil
- 6: Fläche
- 7: Vorsprung
- 8: Flanke
- 9: Halterungsbock
- 10: Nut
- 11: Flanke
- 12: Halterungsbock
- 13: Flanke
- 14: Aufnahme
- 15: Halterungselement
- 16: Flanke
- 17: Bund
- A: Längsachse
- D: Dichtelement
- S: Scheibe
- SW: Scheibenwischer
- α: Neigungswinkel
- β: Neigungswinkel

## Patentansprüche

1. Befestigungsanordnung für eine Einrichtung an der Außenseite einer Fahrzeugkarosserie (1), insbesondere eine Scheibenwischeranlage, mit wenigstens einer an der Fahrzeugkarosserie (1) gehalterten Aufnahme (2; 14) für ein Verbindungs- oder Funktionselement der Einrichtung (SW), wobei die Aufnahme (2; 14) über ein quer zu ihrer Längsachse (A) angeordnetes elastisches Glied an der Fahrzeugkarosserie (1) gehaltert und bei einer Stoßbelastung von der Halterung lösbar ist und wobei die Aufnahme (2; 14) über ein an ihr befestigtes Halterungselement (3; 15) mit einem fest an der Fahrzeugkarosserie (1) angeordneten Halterungsbock (9; 12) in Eingriff steht, **dadurch gekennzeichnet, dass** der Halterungsbock (9) oder das Halterungselement (3) das elastische Glied ist, wobei der der Halterungsbock (9) an der Unterseite des Karosseriebleches (1) angeordnet und in axialer und von der Einrichtung wegweisender Richtung konisch erweitert ist und einen in axialer Richtung erheblich konisch erweiterten Abschnitt aufweist und das Halterungselement (3) eine in der angegebenen Richtung mit dem Halterungsbock (9) korrespondierende, konisch erweiterte Öffnung mit einem mit dem erheblich konisch erweiterten Abschnitt korrespondierenden Abschnitt aufweist und an einem mit der Aufnahme (2) fest verbundenen Trägerelement (4) angeordnet ist und wobei der Abschnitt eine konzentrisch angeordnete Nut (10) oder ein konzentrisch angeordneter Vorsprung und der mit dem jeweiligen Abschnitt korrespondierende Abschnitt ein konzentrisch angeordneter Vorsprung (7) bzw. eine konzentrisch angeordnete Nut ist.

2. Befestigungsanordnung für eine Einrichtung an der Außenseite einer Fahrzeugkarosserie (1), insbesondere eine Scheibenwischeranlage, mit wenigstens einer an der Fahrzeugkarosserie (1) gehalterten Aufnahme (2; 14) für em Verbindungs- oder Funktionselement der Einrichtung (SW), wobei die Aufnahme (2; 14) über ein quer zu ihrer Längsachse (A) angeordnetes elastisches Glied an der Fahrzeugkarosserie (1) gehaltert und bei einer Stoßbelastung von der Halterung lösbar ist und wobei die Aufnahme (2; 14) über ein an ihr befestigtes Halterungselement (3; 15) mit einem fest an der Fahrzeugkarosserie (1) angeordneten Halterungsbock (9; 12) in Eingriff steht, **dadurch gekennzeichnet, daß** der Halterungsbock (9) oder das Halterungselement (3) das elastische Glied ist, wobei der Halterungsbock (12) an einer Öffnung des Karosseriebleches (1) befestigt ist und eine in axialer und von der Einrichtung (SW) wegweisenden Richtung verjüngte Öffnung mit einem in axialer Richtung erheblich verjüngten Abschnitt aufweist, und das Halterungselement (15) konzentrisch an der Aufnahme (14) angeordnet und in der angegebenen Richtung, mit der Öffnung und mit dem Abschnitt korrespondierend, konisch verjüngt ist.

3. Befestigungsanordnung nach Anspruch 2, **dadurch gekennzeichnet, dass** der am Halterungsbock (12) ausgebildete Abschnitt eine konzentrisch angeordnete Nut (13) oder ein konzentrisch angeordneter Vorsprung und der mit dem jeweiligen Abschnitt korrespondierende Abschnitt ein konzentrisch angeordneter Vorsprung (16) bzw. eine konzentrisch angeordnete Nut ist.

4. Befestigungsanordnung nach Anspruch 1 oder 2, **dadurch gekennzeichnet, daß** das Halterungselement (3) ein den Halterungsbock (9) wenigstens im Bereich der Nut oder des Vorsprungs umschließender Federring ist, und daß dieser auf der der Aufnahme (2) zugewandten Seite des Halterungsbockes (9) unterbrochen ist.

5. Befestigungsanordnung nach Anspruch 1 oder 2, **dadurch gekennzeichnet, daß** der Neigungswinkel (α) der konischen Flächen des Halterungsbockes (9; 12) und des Halterungselementes (3; 15) gegenüber deren Achsen 10 bis 20 Grad, vorzugsweise im wesentlichen 15 Grad, beträgt.

6. Befestigungsanordnung nach Anspruch 1 oder 2, **dadurch gekennzeichnet, daß** die Nut und der Vorsprung einen in gleicher Richtung wie am Halterungsbock (9; 12) konisch ausgebildeten Bereich (8; 11; 13; 16) mit einem Neigungswinkel (β) von 30 bis 40 Grad, vorzugsweise von im wesentlichen 35 Grad, aufweisen.

7. Befestigungsanordnung nach einem oder mehreren der vorhergehenden Ansprüche, **dadurch gekennzeichnet, daß** das für das Halterungselement (3; 15) oder den Halterungsbock (9; 12) eingesetzte elastische Material ein Kunststoff mit einer Shore-Härte von 60 bis 70 ist.

## Claims

1. Fixing arrangement for a device on the outside of a vehicle body (1), in particular a windscreen wiper unit, having at least one seat (2; 14) mounted on the vehicle body (1) for a fastening or functional element of the device (SW), the seat (2; 14) being mounted on the vehicle body (1) by way of a flexible member arranged transversely to its longitudinal axis (A) and being detachable from the mounting in the event of an impact load, and the seat (2; 14) engaging by way of a mounting element (3, 15) affixed thereto with a mounting support (9; 12) firmly arranged on the vehicle body (1), **characterized in that** the mounting support (9) or the mounting element (3) constitutes the flexible member, the mounting support (9) being arranged on the underside of the body sheet metal (1) and being widened conically in an axial direction away from the device, and having a section that is considerably conically widened in an axial direction, and the mounting element (3) having a conically widened opening, corresponding in the specified direction to the mounting support (9) and having a section corresponding to the considerably conically widened section, and being arranged on a carrier element (4) firmly connected to the seat (2), and the section being a concentrically arranged groove (10) or a concentrically arranged projection, and the section corresponding to the respective section being a concentrically arranged projection (7) or a concentrically arranged groove.

2. Fixing arrangement for a device on the outside of a vehicle body (1), in particular a windscreen wiper unit, having at least one seat (2; 14) mounted on the vehicle body (1) for a fastening or functional element of the device (SW), the seat (2; 14) being mounted on the vehicle body (1) by way of a flexible member arranged transversely to its longitudinal axis (A) and being detachable from the mounting in the event of an impact load, and the seat (2; 14) engaging by way of a mounting element (3, 15) affixed thereto with a mounting support (9; 12) firmly arranged on the vehicle body (1), **characterized in that** the mounting support (9) or the mounting element (3) constitutes the flexible member, the mounting support (12) being fixed to an opening of the body sheet metal (1) and having an opening which is tapered in an axial direction away from the device (SW) and which has a section that is considerably tapered in an axial direction, and the mounting element (15) being arranged concentrically on the seat (14) and in the specified direction being conically tapered, corresponding to the opening and to the section.

3. Fixing arrangement according to Claim 2, **characterized in that** the section formed on the mounting support (12) is a concentrically arranged groove (13) or a concentrically arrange projection and the section corresponding to the respective section is a concentrically arranged projection (16) or a concentrically arranged groove.

4. Fixing arrangement according to Claim 1 or 2,
**characterized in that** the mounting element (3) is a spring ring enclosing the mounting support (9) at least in the area of the groove or the projection, and that said ring is interrupted on the side of the mounting support (9) facing the seat (2).

5. Fixing arrangement according to Claim 1 or 2,
**characterized in that** the angle of inclination (α) of the conical faces of the mounting support (9; 12) and the mounting element (3; 15) in relation to their axes is 10 to 20 degrees, preferably substantially 15 degrees.

6. Fixing arrangement according to Claim 1 or 2,
**characterized in that** the groove and the projection have an area (8; 11; 13; 16), conically formed in the same direction as on the mounting support (9; 12) and with an angle of inclination (β) of 30 to 40 degrees) preferably substantially 35 degrees.

7. Fixing arrangement according to any one or more of the preceding Claims, **characterized in that** the flexible material used for the mounting element (3; 15) or the mounting support (9; 12) is a plastic having a Shore hardness of 60 to 70.

## Revendications

1. Structure de fixation d'un dispositif sur le côté extérieur d'une carrosserie de véhicule (1), notamment d'un système essuie-glace, avec au moins un support (2 ; 14), maintenu sur la carrosserie de véhicule (1), pour un élément fonctionnel ou de liaison du dispositif (SW), sachant que le support (2 ; 14) est maintenu sur la carrosserie de véhicule (1) au moyen d'un organe élastique disposé transversalement à son axe longitudinal (A) et peut être libéré de son maintien en cas de choc, et sachant que le support (2 ; 14) se trouve en engagement, au moyen d'un élément de maintien (3 ; 15) fixé sur lui, avec un bloc de maintien (9 ; 12) disposé fixement sur la carrosserie de véhicule (1), **caractérisée en ce que** le bloc de maintien (9) ou l'élément de maintien (3) est l'organe élastique, sachant que le bloc de maintien (9) est disposé sur le dessous de la tôle de carrosserie (1) et est élargi coniquement en direction axiale en éloignement du dispositif et présente une partie considérablement élargie coniquement en direction axiale, et l'élément de maintien (3) présente une ouverture élargie coniquement, correspondant dans la direction indiquée au bloc de maintien (9) et pourvue d'une partie correspondant à ladite partie considérablement élargie coniquement, et est disposé sur un élément porteur (4) fixement assemblé au support (2), et sachant que ladite partie est une rainure (10) disposée concentriquement ou une saillie disposée concentriquement, et la partie correspondant avec ladite partie respective est une saillie (7) disposée concentriquement ou respectivement une rainure disposée concentriquement.

2. Structure de fixation d'un dispositif sur le côté extérieur d'une carrosserie de véhicule (1), notamment d'un système essuie-glace, avec au moins un support (2 ; 14), maintenu sur la carrosserie de véhicule (1), pour un élément fonctionnel ou de liaison du dispositif (SW), sachant que le support (2 ; 14) est maintenu sur la carrosserie de véhicule (1) au moyen d'un organe élastique disposé transversalement à son axe longitudinal (A) et peut être libéré de son maintien en cas de choc, et sachant que le support (2 ; 14) se trouve en engagement, au moyen d'un élément de maintien (3 ; 15) fixé sur lui, avec un bloc de maintien (9 ; 12) disposé fixement sur la carrosserie de véhicule (1), **caractérisée en ce que** le bloc de maintien (9) ou l'élément de maintien (3) est l'organe élastique, sachant que le bloc de maintien (12) est fixé sur une ouverture de la tôle de carrosserie (1) et présente une ouverture rétrécie en direction axiale en éloignement du dispositif (SW) et pourvue d'une partie considérablement rétrécie en direction axiale, et l'élément de maintien (15) est disposé concentriquement sur le support (14) et est rétréci coniquement dans la direction indiquée, d'une manière correspondante à l'ouverture et à ladite partie.

3. Structure de fixation selon la revendication 2, **caractérisée en ce que** ladite partie configurée sur le bloc de maintien (12) est une rainure (13) disposée concentriquement ou une saillie disposée concentriquement, et la partie correspondant avec ladite partie respective est une saillie (16) disposée concentriquement ou respectivement une rainure disposée concentriquement.

4. Structure de fixation selon la revendication 1 ou 2, **caractérisée en ce que** l'élément de maintien (3) est une rondelle-ressort enserrant le bloc de maintien (9) au moins dans la région de la rainure ou de la saillie, et **en ce que** cette rondelle-ressort est interrompue sur le côté du bloc de maintien (9) qui est tourné vers le support (2).

5. Structure de fixation selon la revendication 1 ou 2, **caractérisée en ce que** l'angle d'inclinaison (α) des faces coniques du bloc de maintien (9 ; 12) et de l'élément de maintien (3 ; 15) par rapport à leurs axes est de 10 à 20 degrés, de préférence de sensiblement 15 degrés.

6. Structure de fixation selon la revendication 1 ou 2, **caractérisée en ce que** la rainure et la saillie présentent une région (8 ; 11 ; 13 ; 16) configurée coniquement dans la même direction que sur le bloc de maintien (9 ; 12), avec un angle d'inclinaison (β) de 30 à 40 degrés, de préférence de sensiblement 35 degrés.

7. Structure de fixation selon une ou plusieurs des revendications précédentes, **caractérisée en ce que** le matériau élastique utilisé pour l'élément de maintien (3 ; 15) ou le bloc de maintien (9 ; 12) est une matière plastique ayant une dureté Shore de 60 à 70.
